# EUROPÄISCHE PATENTANMELDUNG

(11) **EP 1 061 267 A2**
(43) Veröffentlichungstag der Anmeldung: **20.12.2000**
(21) Anmeldenummer: 00111789.4
(22) Anmeldetag: 03.06.2000
(51) Int. Cl.: F15B 15/12, F16J 15/54

(54) **Dichtungseinheit für einen Schwenkmotor**

(30) Priorität: 17.06.1999 DE 19927621
(71) Anmelder: Bayerische Motoren Werke Aktiengesellschaft, 80809 München (DE); Mannesmann Sachs AG, 97419 Schweinfurt (DE)
(72) Erfinder: Jurr, Reinhold, 81247 München (DE); Schmidt, Wolfgang, 86899 Landsberg (DE); Nagy, Imre, 85386 Eching (DE); Schiffler, Stefan, 97539 Wonfurt (DE)

(57) **Zusammenfassung**

Dichtungseinrichtung für einen Schwenkmotor, der zwischen einem Außenteil (9) und einem Innenteil (11) einen Hohlraum bildet, der von einem zumindest bereichsweise elastischen Dichtteil (1, 2) in zwei in Umfangsrichtung angrenzende Arbeitskammern geteilt ist. Das Dichtteil (1, 2) ist ringförmig ausgebildet und in einer radialen Ausnehmung in einem radialen Vorsprung an dem Innenteil oder Außenteil etwa in einer radialen Ebene angeordnet. In dem Dichtteil (1, 2) befindet sich ein elastisches Vorspannelement (3), das am Innenumfang des Dichtteiles (1, 2) eine den Außenumfang des Dichtteiles (1, 2) elastisch vergrößernde Vorspannkraft bewirkt. In der Ausnehmung sind in Umfangsrichtung hintereinander zwei ringförmige Dichtteile (1, 2) mit jeweils einem Vorspannelement (3) angeordnet, die von einem Federelement (4) axial und/oder radial entgegengesetzt belastet sind.

## Beschreibung

Die Erfindung betrifft eine Dichtungseinrichtung für einen Schwenkmotor, mit den im Oberbegriff des Patentanspruches 1 angegebenen Merkmalen.

Eine derartige Dichtungseinrichtung ist in der DE 43 37 815 C1 an einem Schwenkmotor verwendet, der zwischen einem zylindrischen Außenteil und einem zylindrischen Innenteil mehrere Arbeitskammern bildet, die axial von Stirnwänden und in Umfangsrichtung von Dichtungen in Vorsprüngen getrennt sind, die einerseits von einer Außenfläche des Innenteiles radial nach außen zu einer Innenfläche des Außenteils und andererseits von der Innenfläche des Außenteiles radial nach innen zu der Außenfläche des Innenteiles gerichtet sind. In den radialen Vorsprüngen ist jeweils eine radiale Ausnehmung ausgebildet, in die ein ringförmiges Dichtteil eingebracht ist, das in einer radialen Ebene angeordnet ist und in seinem Inneren ein elastisches Vorspannelement aufnimmt, das am Innenumfang des Dichtteiles eine den Außenumfang des Dichtteiles elastisch vergrößernde Vorspannkraft bewirkt, unter der das Dichtteil an dem anderen Teil, an der Außenfläche des Innenteiles bzw. an der Innenfläche des Außenteiles abdichtend anliegt. Die radiale Ausnehmung in dem Vorsprung ist breiter als das Dichtteil ausgebildet und nimmt auch ein Füllstück auf, an dem sich das Dichtteil in Umfangsrichtung abstützt. Das ringförmige Dichtteil ist durch einen Rahmen aus dem Werkstoff Polytetrafluorethylen (PTFE) gebildet, der sich zwar durch seine Elastizität an die betreffende Innenfläche bzw; Außenfläche eingeschränkt anpassen kann, jedoch die benachbarten Arbeitskammern des Schwenkmotors nicht ausreichend voneinander trennt.

Der Erfindung liegt die Aufgabe zugrunde, eine Dichtungseinrichtung mit den Merkmalen im Oberbegriff des Patentanspruches 1 anzugeben, die in einem größeren Temperaturbereich ein zumindest ausreichendes Abdichten und Trennen von benachbarten Arbeitskammern des Schwenkmotors ermöglicht.

Diese Aufgabe ist durch die im Patentanspruch 1 angegebenen Merkmale gelöst. Vorteilhafte Ausgestaltungen der Erfindung sind den Unteransprüchen entnehmbar.

Durch die Anordnung von im wesentlichen zwei gleichen ringförmigen, vorzugsweise rechteckförmigen Dichtteilen in jeweils einer etwa radialen Ebene in der Ausnehmung des Vorsprunges und durch die entgegengesetzte axiale und/oder radiale Belastung der Dichtteile durch ein Federelement sowie die jeweils im Innenraum der Dichtteile angeordneten Vorspannelemente können die Dichtteile die benachbarten Arbeitsräume des Schwenkmotors besser und über einen größeren Temperaturbereich voneinander trennen und abdichten. Die Elastizität und Vorspannung der Dichtteile sowie der Vorspannelemente kann so gewählt werden, daß die Dichtteile in einer vorgegeben Richtung oder in zwei beispielsweise senkrecht zueinander stehenden Richtungen einerseits an der betreffenden Dichtfläche und andererseits an den Wänden der die Dichtelemente aufnehmenden Ausnehmung zumindest weitgehend abdichtend anliegen. Die Dichtwirkung der Dichtteile kann von den in den benachbarten Arbeitskammern herrschenden Drücken unterstützt sein kann.

Zwei Ausführungsbeispiele der Erfindung werden anhand einer Zeichnung näher erläutert. Es zeigen
- Figur 1: ein erstes Ausführungsbeispiel in einer perspektivischen Ansicht der Dichtteile vor dem Einbau in einen Schwenkmotor,
- Figur 2: die in Figur 1 dargestellte Dichteinrichtung in einer Seitenansicht,
- Figur 3: die in den Figuren 1 und 2 dargestellte Dichtungseinrichtung nach dem Einbau in den Schenkmotor,
- Figur 4: ein zweites Ausführungsbeispiel in einer Figur 2 entsprechenden Ansicht vor dem Einbau in den Schwenkmotor und
- Figur 5: die in Figur 4 dargestellte Dichtungseinrichtung nach dem Einbau in den Schwenkmotor.

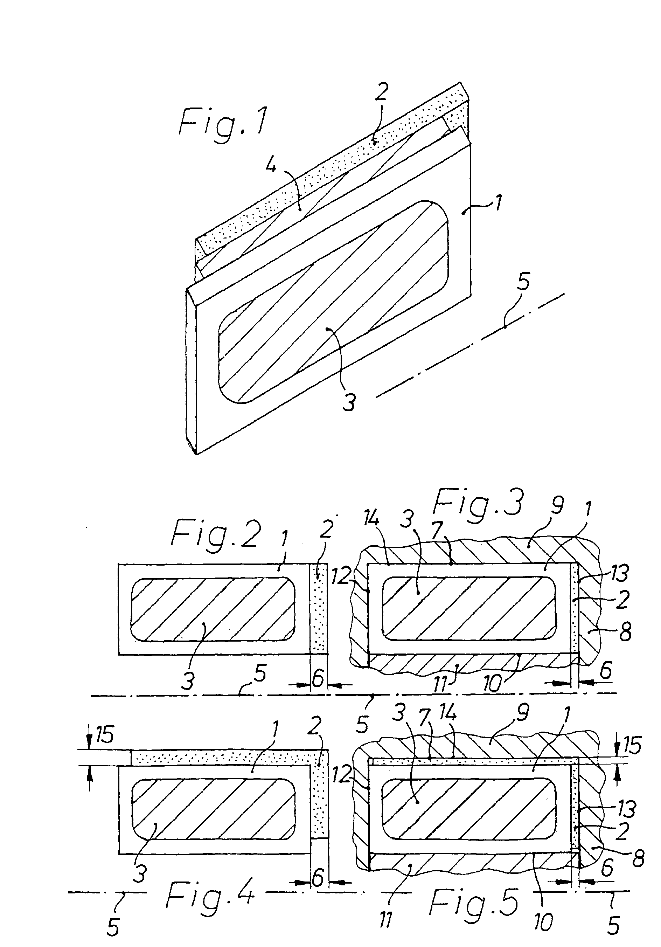

Die in Figur 1 gemäß einem ersten Ausführungsbeispiel vor dem Einbau in einen Schwenkmotor in einer perspektivischen Ansicht dargestellte Dichtungseinrichtung ist zum Abdichten und Trennen von zwei Arbeitskammern des Schwenkmotors vorgesehen und weist zwei im wesentlichen gleiche ringförmige, vorzugsweise rechteckförmige Dichtteile 1, 2 auf, wobei zur besseren Unterscheidung das in der Figur hintere Dichtteil 2 mit einem Punktraster versehen ist. Die Dichtteile 1, 2 bilden aus dem Werkstoff Polytetrafluorethylen (PTFE) gefertigte Rahmen, die eine Eigenelastizität aufweisen. Im Innenraum der Dichtteile 1, 2 ist jeweils ein elastisches Vorspannelement 3 angeordnet, das nach dem Einbau der Dichtungseinrichtung in eine radiale Ausnehmung in einem Vorsprung eines Innenteiles oder eines Außenteiles am Innenumfang des betreffenden Dichtteiles 1 bzw. 2 eine dem Außenumfang des Dichtteiles 1 bzw. 2 elastisch vergrößernde Vorspannkraft in radialer Richtung bewirkt. In Umfangsrichtung ist zwischen den beiden Dichtteilen 1, 2 ein Federelement 4 aus einem Elastomer angeordnet, das die beiden Dichtteile 1, 2 in Umfangsrichtung des Schwenkmotors auf Abstand hält bzw. in Umfangsrichtung elastisch auseinanderdrückt und gleichzeitig die beiden Dichtteil 1, 2 in Richtung der Achse 5 des Schwenkmotors entgegengesetzt elastisch belastet. Bei dieser Ausführung sind die im Inneren der Dichtteile 1, 2 angeordneten Vorspannelemente 3 und das Federelement 4 einstückig aus einem einzigen Elastomer gefertigt.

In Figur 2 ist die in Figur 3 vereinfacht dargestellte Dichtungseinrichtung in einer Seitenansicht vor dem Einbau in den Schwenkmotor dargestellt, in der die Dichtteile 1, 2 in Umfangsrichtung des nicht dargestellten Schwenkmotors hintereinander angeordnet sind. Wie der Figur zu entnehmen ist, weisen die beiden Dichtteile 1, 2 bei entspanntem Federelement in Richtung der Achse 5 des Schwenkmotors einen axialen Versatz 6 auf.

In Figur 3 ist die in den Figuren 1 und 2 dargestellte Dichtungseinrichtung in eine radiale Ausnehmung 7 in einem radialen Vorsprung 8 eingebracht, der von einer innenfläche eines Außenteiles 9 radial nach innen zu einer Außenflache 10 eines Innenteiles 11 gerichtet ist. In ähnlicher Weise sind an dem Innenteil 11 radial gegenüberliegend zwei nicht dargestellte Vorsprünge ausgebildet, die sich von der Außenfläche 10 radial nach außen zu der Innenfläche des Außenteiles 9 erstrecken. Durch die Vorsprünge 8 sowie weitere Vorsprünge, das Innenteil 11 und das Außenteil 9, sowie stirnseitig an dem Innenteil oder an dem Außenteil befestigte Stirnwände 12, 13 sind insgesamt vier Arbeitskammern gebildet, von denen jeweils zwei diagonal gegenüberliegende Arbeitskammern in Verbindung stehen. Die Arbeitskammern sind wechselweise mit einem Druckmedium bzw. einer Tankleitung zu verbinden, um eine Drehbewegung des Innenteiles 11 gegenüber dem Außenteil 9 bzw. umgekehrt zu erreichen. Wie Figur 3 entnommen werden kann, ist nach dem Einbau der beiden Dichtteile 1, 2 in die radiale Ausnehmung 7 der axiale Versatz der beiden Dichtteile 1, 2 vermindert, die unter der Vorspannkraft des in der Figur nicht erkennbaren Federelements (4 in Figur 1) in Richtung der Achse 5 des Schwenkmotors entgegengesetzt gegen Stirnflächen 12, 13 elastisch belastet sind, die im vorliegenden Fall von dem Außenteil 9 gebildet sind. Die beiden in der Ausnehmung 7 angeordneten Dichtteile 1, 2 sind auch jeweils durch das Vorspannelement in einer zur Achse 5 des Schwenkmotors radialen Ebene vorgespannt und liegen unter dieser Vorspannkraft einerseits am Boden 14 der Ausnehmung 7 und andererseits an der Außenfläche 10 des Innenteils 11 dichtend an, wodurch die beiden in Umfangsrichtung benachbarten Arbeitskammern voneinander getrennt sind.

Bei dem in Figur 4 vor dem Einbau in einen Schwenkmotor in einer mit Figur 2 vergleichbaren Seitenansicht dargestellten zweiten Ausführungsbeispiel sind ebenfalls zwei ringförmige Dichtteile 1, 2 verwendet, zwischen denen in Umfangsrichtung ein mit dem Federelement 4 in Figur 1 vergleichbares Federelement angeordnet ist. Jeweils im Innenraum der Dichtteile 1, 2 ist ein Vorspannelement 3 angeordnet, das mit dem Federelement einstückig verbunden ist und die beiden Dichtteile 1, 2 in Umfangsrichtung auf Abstand hält und elastisch voneinander weg belastet. Zur Vermeidung einer wiederholten Beschreibung sind zwischen den beiden Ausführungsbeispielen vergleichbare Teile mit einer gleichen Bezugszahl versehen. Wie Figur 4 noch zu entnehmen ist, sind die beiden Dichtteile 1, 2 bei entspanntem Federelement in Richtung der Achse 5 des Schwenkmotors und radial hierzu gegeneinander etwas versetzt angeordnet.

Werden die beiden in Figur 4 dargestellten Dichtteile 1, 2 und das dazwischen angeordnete Federelement wie in Figur 5 dargestellt in eine radiale Ausnehmung 7 in einem Vorsprung 8 des Außenteiles 9 eingebracht, so wird das Federelement axial und radial zusammengedrückt, wodurch das Federelement eine Vorspannkraft bewirkt, unter der sich der axiale Versatz 6 und der radiale Versatz 15 vermindern und die beiden Dichtteile 1, 2 sowohl in radialer Richtung als auch in Richtung der Achse 5 entgegengesetzt gegen die Stirnflächen 12, 13 des Außenteiles 9 sowie ein Dichtteil 2 gegen den Boden 14 der Ausnehmung 7 und das andere Dichtteil 1 gegen die Außenfläche 10 des Innenteiles 11 belastet sind. Zusätzlich sind die beiden Dichtteile 1, 2 durch die im Innenraum angeordneten Vorspannelemente 3 radial belastet, wodurch sich jeweils der Außenumfang der Dichtteile 1, 2 elastisch vergrößert und dadurch zusätzlich ein Dichtteil 2 an den Boden 14 und das andere Dichtteil 1 an die Außenfläche 10 des Innenteiles 11 angedrückt wird. Durch eine Abstimmung der Elastizitäten der Dichtteile 1, 2 sowie der Vorspannelemente 3 und des Federelements sind die beiden in Umfangsrichtung an die Dichteinrichtung angrenzenden Arbeitsräume des Schwenkmotors voneinander getrennt und abgedichtet, wodurch der in einer betreffenden Arbeitskammer herrschende Druck ein maximales Drehmoment an dem beweglichen Innenteil oder Außenteil des Schwenkmotors bewirkt.

Bei den Ausführungsbeispielen ist zwischen den beiden Dichtteilen ein Federelement angeordnet, das die beiden Dichtteile in Umfangsrichtung auf Abstand hält. Ebenso kann ein Federelement vorgesehen sein, das die beiden Dichtteile kaum oder nicht in Umfangsrichtung auf Abstand hält. Die Vorspannelemente und das Federelement können durch separate Teile, beispielsweise ein oder mehrere Metallfedern gebildet sein, die in der beschriebenen Weise die Dichtteile elastisch axial und/oder radial belasten. Vorzugsweise sind die beiden Dichtteile aus dem Werkstoff Polytetrafluorethylen (PTFE) gebildet. Ebenso können die Dichtteile auch aus einem anderen Werkstoff gefertigt sein. Die Innenform und die Außenform der Dichtteile bzw. die Form der Vorspannelemente und des Federelements können von einem Fachmann willkürlich gewählt sein.

## Patentansprüche

1. Dichtungseinrichtung für einen Schwenkmotor, der zwischen einem Außenteil und einem Innenteil einen Hohlraum aufweist, der von einem zumindest bereichsweise elastischen Dichtteil in zwei in Umfangsrichtung angrenzende Arbeitskammern geteilt ist, wobei das Dichtteil ringförmig ausgebildet und in einem radialen Vorsprung an dem Innenteil oder Außenteil etwa in einer radialen Ebene angeordnet ist, mit einem elastischen Vorspannelement in dem Dichtteil, das am Innenumfang des Dichtteiles eine den Außenumfang des Dichtteiles elastisch vergrößernde Vorspannkraft bewirkt, dadurch gekennzeichnet, daß in der Ausnehmung (7) in Umfangsrichtung hintereinander zwei ringförmige Dichtteile (1, 2) mit jeweils einem Vorspannelement (3) angeordnet sind und ein Federelement (4) die beiden Dichtteile (1, 2) axial und/oder radial entgegengesetzt vorspannt.

2. Dichtungseinrichtung nach Anspruch 1, dadurch gekennzeichnet, daß das Vorspannelement und/oder das Federelement durch wenigstens eine Metallfeder gebildet ist.

3. Dichtungseinrichtung nach Anspruch 1 oder 2, dadurch gekennzeichnet, daß die Vorspannelemente (3) und das Federelement (4) durch ein einziges Federteil gebildet sind.

4. Dichtungseinrichtung nach einem der Ansprüche 1 bis 3, dadurch gekennzeichnet, daß das Vorspannelement (3) und/oder das Federelement (4) aus einem Elastomer gefertigt sind.

5. Dichtungseinrichtung nach Anspruch 3 oder 4, dadurch gekennzeichnet, daß das Federelement (4) eine Abstandschicht bildet, die in Umfangsrichtung zwischen den Dichtteilen (1, 2) angeordnet ist.

6. Dichtungseinrichtung nach Anspruch 5, dadurch gekennzeichnet, daß das Federelement (4) in Umfangsrichtung elastisch vorgespannt ist und die beiden Dichtteile (1,2) voneinander weg belastet.

7. Dichtungseinrichtung nach einem der Ansprüche 1 bis 6, dadurch gekennzeichnet, daß die Dichtteile (1, 2) aus dem Werkstoff Polytetrafluorethylen (PTFE) gefertigt sind.
